# EUROPEAN PATENT SPECIFICATION

(11) **EP 3 927 598 B1**
(45) Date of publication and mention of the grant of the patent: **23.08.2023**
(21) Application number: 19915651.4
(22) Date of filing: 18.02.2019
(51) Int. Cl.: B62D 25/10, B62D 25/12, B62D 27/02

(54) **MULTI-PIECE REAR TRUNK LID**
MEHRTEILIGE HECKKLAPPE
COUVERCLE DE COFFRE ARRIÈRE EN PLUSIEURS PARTIES

(43) Date of publication of application: 29.12.2021
(73) Proprietor: PSA Automobiles SA, 78300 Poissy (FR)
(72) Inventor: WANG, Ziye, Shanghai 200233 (CN); REZKI, Tarek, Shanghai 200032 (CN)
(86) International application number: PCT/CN2019/075330
(87) International publication number: WO 2020/168442

(56) References cited:
- CN-A- 101 353 059
- CN-A- 105 083 390
- CN-A- 105 083 391
- CN-U- 203 345 061
- CN-U- 204 713 216
- CN-U- 205 589 322
- JP-A- 2010 149 754
- JP-A- 2015 058 808
- US-A1- 2018 056 763

## Description

### Technical field

Generally, a rear trunk lid is made out of two stamped sheets: an outer panel and a reinforcing structure. It is known that a rear trunk lid with a complex shape cannot be manufactured with two stamped sheets with standard tools. Such a design appeared to be difficult to realize because of a high rate of defect products during the stamping process. To overcome this limitation, it has been proposed to manufacture such a trunk lid with three pieces. Vehicle design specifications become more and more challenging in terms of shape complexity requiring new cost effective rear trunk lid structures.

From the prior art US 2018/056763 A1 is known.

### Disclosure of the invention

The invention has for technical problem to provide a solution to at least one drawback of the prior art. More specifically, the invention has for technical problem to manufacture a rear trunk lid with complex shapes.

For this purpose, the invention is directed a rear trunk lid for a vehicle, comprising: an outer panel with a main portion and a rear portion bent relative to the main portion; a lower panel extending down from the rear portion of the outer panel when the lid is in a closing position on the vehicle; a reinforcing structure attached to an inner side of the outer panel and the lower panel; wherein the rear trunk lid further comprises an intermediate panel interconnecting the rear portion of the outer panel to the lower panel, and extending horizontally in the closing position.

According to a preferred embodiment, the outer panel, the lower panel and the intermediate panel are made of metal and attached to each other by spot-welding points.

According to a preferred embodiment, the lower panel and the intermediate panel are structured and comprise holes for fastening a lower rear trim to the lower panel and an upper rear trim to the intermediate panel.

According to a preferred embodiment, said lid comprises the upper rear trim mounted on the intermediate panel and the lower rear trim mounted on the lower panel.

According to a preferred embodiment, the upper rear trim is also fastened to the lower panel by fasteners extending longitudinally and extending through said panel.

According to a preferred embodiment, the upper rear trim is also fastened to the intermediate panel by clipping fasteners engaging through said panel.

According to a preferred embodiment, the main portion comprises a depression designed and structured for receiving a third stop lamp, the depression being structured and comprising holes for fastening the third stop lamp.

According to a preferred embodiment, the reinforcing structure comprises a main element and a reinforcing stamped sheet extending transversally and welded on an upper portion of the main element, an outer surface of the reinforcing stamped sheet being attached to an inner side of the outer panel, at the main portion.

According to a preferred embodiment, the main element is also attached to the inner side of the outer panel and the lower panel, and two side elements are attached to the inner side of the outer panel at the bend between the main and rear portions, at each lateral ends of said bend.

The invention is also directed to a vehicle comprising: a vehicle body; rear trunk lid; a hinge connecting the rear trunk lid to the car body; wherein the rear trunk lid is a rear trunk lid according to the invention.

The invention is interesting in that it provides a light weight solution with an improved overall rigidity. Also, the solutions ease the assembly process. Finally, several electric devices can be easily integrated into the rear trunk lid.

### Brief description of the drawings

Other features and advantages of the present invention will be readily understood from the following detailed description and drawings among them:
- Figure 1 is a section of a rear trunk lid according to the invention;
- Figure 2 shows an outer panel and its constituting elements;
- Figure 3 illustrates a reinforcing structure and its constituting elements.

### Detailed description

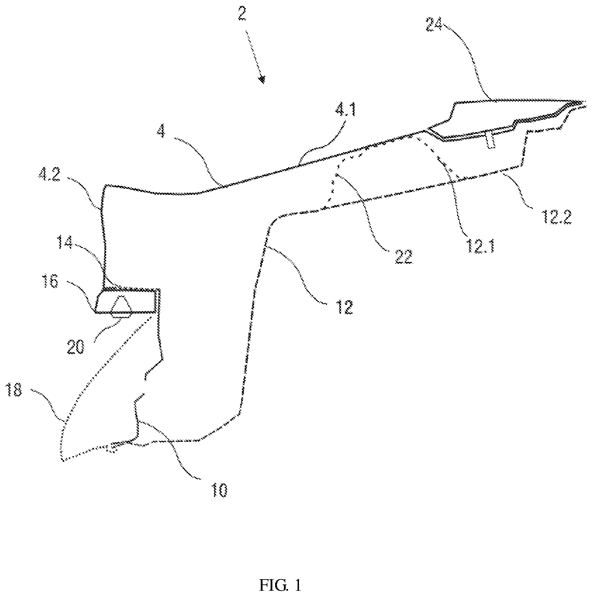

Figure 1 shows a rear trunk lid 2 for a vehicle. The rear trunk lid 2 is depicted in a close position when it is assembled on the vehicle (not shown). The rear trunk lid 2 comprises an outer panel 4 with a main portion 4.1 and a rear portion 4.2 bent relative to the main portion 4.1. The rear trunk lid 2 also includes a lower panel 10 extending down from the rear portion 4.2 of the outer panel 4.

A reinforcing structure (inner panel) 12 is attached to an inner side of the outer panel 4 and the lower panel 10. An intermediate panel 14 is foreseen for interconnecting the rear portion 4.2 of the outer panel 4 to the lower panel 10. The outer panel 4, the lower panel 10 and the intermediate panel 14 are made of metal and attached to each other by spot-welding points. The intermediate panel 14 presents a generally concave shape, improving stiffness and providing roominess for accommodating an electrical switch 20, which is assembled to an upper rear trim 16. Furthermore, the solution of the invention allows having a horizontal wall extending from a lower end of the outer panel 4 to an upper end of the lower panel 10, the horizontal wall being formed by the intermediate wall 14. Thanks to this design, the upper rear trim 16 can have a thin thickness.

The lower panel 10 and the intermediate panel 14 are structured and comprise holes for fastening a lower rear trim 18 to the lower panel 10 and the upper rear trim 16 to the intermediate panel 14. The rear trunk lid 2 comprises the upper rear trim 16 mounted on the intermediate panel 14 and the lower rear trim 18 mounted on the lower panel 10. The upper rear trim 16 comprises the electric switch 20. The upper rear trim 16 is also fastened to the lower panel 10 by fasteners such as screws extending longitudinally and extending through the lower panel 10. The upper rear trim 16 is fastened to the intermediate panel 14 by clipping fasteners engaging through the intermediate panel 14. Two lamp clusters (not shown) resting on the lower panel 10 are respectively fixed to the reinforcing structure 12 with screws. The upper rear trim 16 and the lower rear trim 18 can be made of plastic. These elements are foreseen to be easily replaced after an accident. The main portion 4.1 comprises a depression (extending transversally) designed and structured for receiving a third stop lamp 24 (extending transversally), preferably on a front portion of the main portion 4.1. The depression is structured and comprises holes for fastening the third stop lamp 24.

The reinforcing structure 12 further comprises a main element 12.2 and a reinforcing stamped sheet 12.1 extending transversally and welded on an upper portion of the main element 12.2. An outer surface of the reinforcing stamped sheet 12.1 is glued to an inner side of the outer panel 4 via an adhesive bead. This structure improves the stiffness of the outer panel 4, especially the area of the third stop lamp 24.

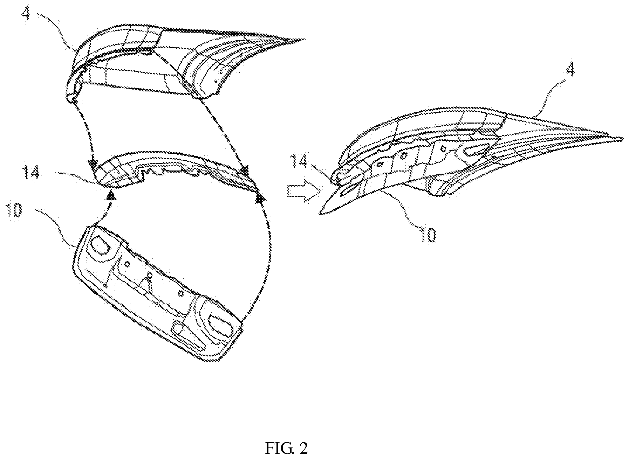

Figure 2 shows that the outer skin panel assembly of the rear trunk 2 comprises the outer panel 4, the intermediate panel 14 and the lower panel 10, each being made of a metal stamped sheet. The outer panel 4, the lower panel 10 and the intermediate panel 14 are attached to each other by spot-welding points.

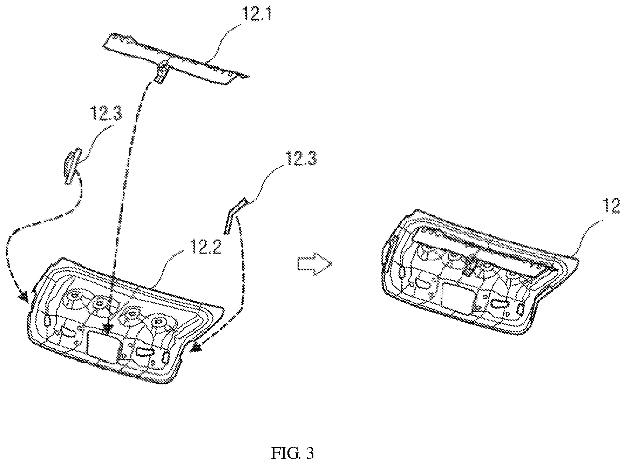

Figure 3 represents the reinforcing structure 12 of the rear trunk 2. This assembly comprises the main element 12.2 and two side elements 12.3. The main element 12.2 is aimed to be attached to the inner side of the outer panel 4 and the lower panel 10. The two side elements 12.3 are also attached to the inner side of the outer panel 4 at the bend between the main portion 4.1 and rear portion 4.2 of the outer panel 4, at each lateral ends of the bend. Also, the reinforcing structure 12 further comprises the reinforcing stamped sheet 12.1 mounted on the upper portion of the main element 12.2. The two side elements 12.3 are attached to the reinforcing structure 12 by means of spot-welding points.

The rear trunk lid 2 is obtained by assembling together the outer skin panel assembly and the reinforcing structure 12, applying the adhesive bead between them before the assembly and hemming an edge area of the reinforcing structure 12 to an edge area of the outer skin panel assembly.

## Claims

1. Rear trunk lid (2) for a vehicle, comprising:
- an outer panel (4) with a main portion (4.1) and a rear portion (4.2) bent relative to the main portion (4.1);
- a lower panel (10) extending down from the rear portion (4.2) of the outer panel (4) when the lid (2) is in a closing position on the vehicle;
- a reinforcing structure (12) attached to an inner side of the outer panel (4) and the lower panel (10);
**characterized in that** the rear trunk lid (2) further comprises an intermediate panel (14) interconnecting the rear portion (4.2) of the outer panel (4) to the lower panel (10), and extending horizontally in the closing position.

2. Rear trunk lid (2) according to claim 1, wherein the outer panel (4), the lower panel (10) and the intermediate panel (14) are made of metal and attached to each other by spot-welding points.

3. Rear trunk lid (2) according to claim 1, wherein the lower panel (10) and the intermediate panel (14) are structured and comprise holes for fastening a lower rear trim (18) to the lower panel (10) and an upper rear trim (16) to the intermediate panel (14).

4. Rear trunk lid (2) according to claim 3, wherein said lid (2) comprises the upper rear trim (16) mounted on the intermediate panel (14) and the lower rear trim (18) mounted on the lower panel (10).

5. Rear trunk lid (2) according to claim 4, wherein the upper rear trim (16) is also fastened to the lower panel (10) by fasteners extending longitudinally and extending through said panel (10).

6. Rear trunk lid (2) according to claim 5, wherein the upper rear trim (16) is also fastened to the intermediate panel (14) by clipping fasteners engaging through said panel (14).

7. Rear trunk lid (2) according to claim 1, wherein the main portion (4.1) comprises a depression designed and structured for receiving a third stop lamp (24), the depression being structured and comprising holes for fastening the third stop lamp (24).

8. Rear trunk lid (2) according to claim 1 or 7, wherein the reinforcing structure (12) comprises a main element (12.2) and a reinforcing stamped sheet (12.1) extending transversally and welded on an upper portion of the main element (12.2), an outer surface of the reinforcing stamped sheet (12.1) being attached to an inner side of the outer panel (4), at the main portion (4.1).

9. Rear trunk lid (2) according to claim 8, wherein the main element (12.2) is also attached to the inner side of the outer panel (4) and the lower panel (10), and two side elements (12.3) are attached to the inner side of the outer panel (4) at the bend between the main (4.1) and rear (4.2) portions, at each lateral ends of said bend.

10. Vehicle comprising:
- a vehicle body;
- rear trunk lid (2);
- a hinge connecting the rear trunk lid (2) to the car body;
wherein
the rear trunk lid (2) is a rear trunk lid (2) according to any of claims 1 to 9.

## Patentansprüche

1. Ein hinterer Kofferraumdeckel (2) für ein Fahrzeug, umfassend: ein Außenblech (4) mit einem Hauptabschnitt (4.1) und einem gegenüber dem Hauptabschnitt (4.1) gebogenen hinteren Abschnitt (4.2); eine untere Platte (10), die sich vom hinteren Abschnitt (4.2) der Außenplatte (4) nach unten erstreckt, wenn sich der Deckel (2) in einer Schließposition am Fahrzeug befindet; eine Verstärkungsstruktur (12), die an einer Innenseite des Außenblechs (4) angebracht ist und die untere Platte (10); **dadurch gekennzeichnet, dass** der hintere Kofferraumdeckel (2) außerdem eine Zwischenplatte (14) umfasst, die den hinteren Abschnitt (4.2) der Außenplatte (4) mit der unteren Platte (10) verbindet und sich in der Schließposition horizontal erstreckt.

2. Ein hinterer Kofferraumdeckel (2) nach Anspruch 1, wobei das Außenblech (4), das Unterblech (10) und das Zwischenblech (14) aus Metall bestehen und durch Punktschweißpunkte aneinander befestigt sind.

3. Ein hinterer Kofferraumdeckel (2) nach Anspruch 1, wobei das untere Blech (10) und das Zwischenblech (14) strukturiert sind und Löcher zum Befestigen einer unteren Heckverkleidung (18) am unteren Blech (10) umfassen eine obere hintere Verkleidung (16) an der Zwischenplatte (14).

4. Der hintere Kofferraumdeckel (2) nach Anspruch 3, wobei der Deckel (2) die obere hintere Verkleidung (16), die an der Zwischenplatte (14) montiert ist, und die untere hintere Verkleidung (18) umfasst, die an der unteren Platte montiert ist ( 10).

5. Der hintere Kofferraumdeckel (2) nach Anspruch 4, wobei die obere hintere Verkleidung (16) auch an der unteren Platte (10) durch Befestigungselemente befestigt ist, die sich in Längsrichtung erstrecken und sich durch die Platte (10) erstrecken.

6. Ein hinterer Kofferraumdeckel (2) nach Anspruch 5, **dadurch gekennzeichnet, dass** die obere Heckverkleidung (16) ebenfalls an der Zwischenplatte (14) befestigt ist, indem durch die Platte (14) hindurchgreifende Clipbefestigungen angebracht sind.

7. Ein hinterer Kofferraumdeckel (2) nach Anspruch 1, wobei der Hauptabschnitt (4.1) eine Vertiefung aufweist, die zur Aufnahme einer dritten Bremsleuchte (24) ausgebildet und strukturiert ist, wobei die Vertiefung strukturiert ist und Löcher zur Befestigung der dritten Bremsleuchte aufweist (24).

8. Ein hinterer Kofferraumdeckel (2) nach Anspruch 1 oder 7, wobei die Verstärkungsstruktur (12) ein Hauptelement (12.2) und ein verstärkendes Stanzblech (12.1) umfasst, das sich quer erstreckt und an einem oberen Abschnitt des Hauptelements angeschweißt ist (12.2), wobei eine Außenfläche des verstärkenden Stanzblechs (12.1) an einer Innenseite des Außenblechs (4) am Hauptabschnitt (4.1) befestigt ist.

9. Ein hinterer Kofferraumdeckel (2) nach Anspruch 8, wobei das Hauptelement (12.2) auch an der Innenseite des Außenblechs (4) und des Unterblechs (10) befestigt ist und zwei Seitenelemente (12.3) sind an der Innenseite des Außenblechs (4) an der Biegung zwischen dem Hauptteil (4.1) und dem hinteren Teil (4.2) an den jeweiligen seitlichen Enden der Biegung angebracht.

10. Ein Fahrzeug, umfassend:
- eine Fahrzeugkarosserie;
- hinterer Kofferraumdeckel (2);
- ein Scharnier, das den hinteren Kofferraumdeckel (2) mit der Karosserie verbindet; wobei der hintere Kofferraumdeckel (2) ein hinterer Kofferraumdeckel (2) nach einem der Ansprüche 1 bis 9 ist.

## Revendications

1. Couvercle de coffre arrière (2) pour un véhicule, comprenant : un panneau extérieur (4) avec une partie principale (4.1) et une partie arrière (4.2) pliées par rapport à la partie principale (4.1) ; un panneau inférieur (10) s'étendant vers le bas depuis la partie arrière (4.2) du panneau extérieur (4) lorsque le couvercle (2) est dans une position de fermeture sur le véhicule ; une structure de renforcement (12) fixée à un côté intérieur du panneau extérieur (4) et le panneau inférieur (10); **caractérisé en ce que** le couvercle de coffre arrière (2) comprend en outre un panneau intermédiaire (14) reliant la partie arrière (4.2) du panneau extérieur (4) au panneau inférieur (10), et s'étendant horizontalement en position de fermeture.

2. Couvercle de coffre arrière (2) selon la revendication 1, dans lequel le panneau extérieur (4), le panneau inférieur (10) et le panneau intermédiaire (14) sont métalliques et fixés les uns aux autres par des points de soudure.

3. Couvercle de coffre arrière (2) selon la revendication 1, dans lequel le panneau inférieur (10) et le panneau intermédiaire (14) sont structurés et comportent des trous de fixation d'une garniture arrière inférieure (18) au panneau inférieur (10) et une garniture arrière supérieure (16) au panneau intermédiaire (14).

4. Couvercle de coffre arrière (2) selon la revendication 3, dans lequel ledit couvercle (2) comprend la garniture arrière supérieure (16) montée sur le panneau intermédiaire (14) et la garniture arrière inférieure (18) montée sur le panneau inférieur ( dix).

5. Couvercle de coffre arrière (2) selon la revendication 4, dans lequel la garniture arrière supérieure (16) est également fixée au panneau inférieur (10) par des attaches s'étendant longitudinalement et traversant ledit panneau (10).

6. Couvercle de coffre arrière (2) selon la revendication 5, dans lequel la garniture arrière supérieure (16) est également fixée au panneau intermédiaire (14) par des attaches clipsées s'engageant au travers dudit panneau (14).

7. Couvercle de coffre arrière (2) selon la revendication 1, dans lequel la partie principale (4.1) comprend une dépression conçue et structurée pour recevoir un troisième feu stop (24), la dépression étant structurée et comprenant des trous pour la fixation du troisième feu stop. (24).

8. Couvercle de coffre arrière (2) selon la revendication 1 ou 7, dans lequel la structure de renfort (12) comprend un élément principal (12.2) et une tôle emboutie de renfort (12.1) s'étendant transversalement et soudée sur une partie supérieure de l'élément principal (12.2), une surface externe de la feuille estampée de renforcement (12.1) étant fixée à un côté interne du panneau externe (4), au niveau de la partie principale (4.1).

9. Couvercle de coffre arrière (2) selon la revendication 8, dans lequel l'élément principal (12.2) est également fixé sur le côté intérieur du panneau extérieur (4) et du panneau inférieur (10), et deux éléments latéraux (12.3) sont fixées sur le côté intérieur du panneau extérieur (4) au niveau du coude entre les parties principale (4.1) et arrière (4.2), à chaque extrémité latérale dudit coude.

10. Un véhicule, comprenant :
- une carrosserie de véhicule ;
- couvercle de coffre arrière (2) ;
- une charnière reliant le couvercle de coffre arrière (2) à la carrosserie de la voiture ; dans lequel le couvercle de coffre arrière (2) est un couvercle de coffre arrière (2) selon l'une quelconque des revendications 1 à 9.
